# FASCICULE DE BREVET EUROPEEN

(11) **EP 3 130 519 B1**
(45) Date de publication et mention de la délivrance du brevet: **11.03.2020**
(21) Numéro de dépôt: 16184041.8
(22) Date de dépôt: 12.08.2016
(51) Int. Cl.: B61D 35/00

(54) **CABINE DE TOILETTES POUR VÉHICULE DE TRANSPORT PUBLIC, DESTINÉE À ACCUEILLIR UNE PERSONNE À MOBILITÉ RÉDUITE**
TOILETTENKABINE FÜR ÖFFENTLICHES TRANSPORTFAHRZEUG, DIE FÜR DIE BENUTZUNG DURCH EINE PERSON MIT EINGESCHRÄNKTER MOBILITÄT KONZIPIERT IST
A TOILET CABIN FOR A PUBLIC TRANSPORT VEHICLE, INTENDED TO RECEIVE A PERSON WITH REDUCED MOBILITY

(30) Priorité: 14.08.2015 FR 1557737
(43) Date de publication de la demande: 15.02.2017
(73) Titulaire: ALSTOM Transport Technologies, 93400 Saint-Ouen (FR)
(72) Inventeur: BOULANGER, Alexandre, 91230 MONTGERON (FR)
(74) Mandataire: Lavoix

(56) Documents cités:
- EP-A1- 1 787 884
- EP-A2- 2 060 469
- WO-A1-2013/045256
- FR-A1- 2 935 946

## Description

La présente invention concerne une cabine de toilettes pour un véhicule de transport public, notamment pour un véhicule ferroviaire, destinée à accueillir une personne à mobilité réduite.

Une telle cabine de toilettes doit être suffisamment spacieuse pour permettre son utilisation par une personne à mobilité réduite, et notamment pour permettre à cette personne de manœuvrer un fauteuil roulant de manière suffisamment confortable. A cet effet, lorsque la largeur minimale intérieure du plancher du train est supérieure à 2400 mm, la norme STI 2014 impose d'avoir une architecture à l'intérieur du module de toilette permettant de respecter une méthode d'approche latérale de la cuvette de WC. Cette méthode d'approche latérale requiert la présence, dans la cabine de toilettes, d'un espace circulaire de diamètre égal à 1500 mm. La norme STI 2014 prévoit également un dégagement de 700 mm de longueur devant le lavabo, pour permettre à la personne à mobilité réduite d'accéder au lavabo, ainsi qu'à un miroir ou tout autre composant de la cabine de toilettes.

Le document EP 2 060 469 A2 montre une cabine de toilettes pour véhicule ferroviaire. Ici, l'accès à la cuvette de WC pour la personne à mobilité réduite se fait frontalement et non pas latéralement.

Toutefois, une simple augmentation des dimensions d'une cabine de toilettes pour respecter cette norme STI 2014 n'est pas satisfaisante, car l'encombrement général de la cabine de toilettes deviendrait alors trop important.

L'invention a notamment pour but de remédier à cet inconvénient, en proposant une cabine de toilettes optimisée pour répondre à la norme STI 2014, tout en présentant un encombrement limité.

A cet effet, l'invention a pour objet une cabine de toilettes de véhicule de transport public, notamment de véhicule ferroviaire, destinée à accueillir une personne à mobilité réduite, cette cabine étant délimitée par :
- une paroi avant,
- une paroi arrière, agencée en regard de la paroi avant, et séparée de la paroi avant par une première distance, une cuvette de toilettes étant agencée à proximité de cette paroi arrière, cette cuvette de toilettes étant tournée vers la paroi avant,
- une première paroi latérale, à proximité de laquelle est agencée la cuvette de toilettes, et
- une seconde paroi latérale, agencée en regard de la première paroi latérale, une seconde distance maximale étant définie entre cette seconde paroi latérale et la première paroi latérale,
caractérisée en ce qu'au moins un espace circulaire, délimité par un cercle virtuel tangent à la cuvette de toilettes, est défini à proximité de la seconde paroi latérale, cet espace circulaire étant dépourvu d'obstacle fixe, et le cercle virtuel présentant un diamètre supérieur à 95% de la première distance et supérieur à 70% de la seconde distance maximale.

Cet agencement de la cuvette des toilettes, à proximité de la paroi arrière et de la première paroi latérale, et cette définition de l'espace circulaire, permettent d'obtenir une cabine de toilettes dont l'encombrement est optimisé tout en prenant en compte la norme STI 2014.

On notera que la seconde distance maximale est définie comme étant la distance entre deux points les plus distants, l'un pris sur la première paroi latérale, et l'autre pris sur la seconde paroi latérale, dans une direction perpendiculaire à la première paroi latérale.

Lorsque les première et seconde parois latérales sont parallèles, cette seconde distance maximale est de manière classique la distance entre ces parois.

Lorsque la seconde paroi latérale n'est pas droite, par exemple comporte au moins une partie courbe, la seconde distance maximale est la distance entre le point le plus distant de cette seconde paroi latérale et la première paroi latérale, dans une direction perpendiculaire à la première paroi latérale.

Une cabine de toilettes selon l'invention peut comporter en outre l'une ou plusieurs des caractéristiques suivantes, prises seules ou selon toutes combinaisons techniquement envisageables.
- La première paroi latérale porte un panneau fonctionnel comprenant notamment un lavabo, et un espace libre, dépourvu d'obstacle fixe autre que le lavabo et de longueur supérieure à 40% de la première distance, est ménagé en avant de la cuvette de toilettes, le lavabo étant adjacent à cet espace libre.
- L'espace circulaire et l'espace libre se chevauchent en partie.
- La cabine de toilettes comporte une barre latérale d'appui relevable agencée à proximité de la cuvette de toilette, mobile entre une position déployée dans laquelle la barre latérale d'appui s'étend dans l'espace circulaire, sensiblement parallèlement à la cuvette de toilette, et une position rétractée dans laquelle la barre latérale d'appui s'étend en dehors dudit espace circulaire.
- La barre d'appui latérale est agencée à une distance supérieure à 800 mm depuis la seconde paroi latérale.
- La cuvette de toilettes s'étend sensiblement parallèlement aux première et seconde parois latérales.
- La cabine de toilettes comportant une porte coulissante courbe s'étendant en position fermée entre la paroi avant et la seconde paroi latérale, sensiblement parallèlement à un arc du cercle virtuel délimitant l'espace circulaire, et en regard de cet arc.
- La première distance est sensiblement égale à 1560 mm, la seconde distance maximale est sensiblement égale à 2100 mm, et le diamètre du cercle virtuel est sensiblement égal à 1500 mm.

L'invention concerne également un véhicule de transport public, notamment véhicule ferroviaire, caractérisé en ce qu'il comporte une cabine de toilettes telle que définie précédemment.

L'invention sera mieux comprise à la lecture de la description qui va suivre, donnée uniquement à titre d'exemple, et faite en se référant aux figures annexées parmi lesquelles :
- la figure 1 est une vue schématique du dessus d'une cabine de toilettes selon un exemple de mode de réalisation de l'invention, dans lequel un fauteuil roulant est représenté en approche latérale ;
- la figure 2 est une vue similaire à la figure 1, dans lequel le fauteuil roulant est représenté en approche diagonale ;
- la figure 3 est une vue schématique du dessus d'une cabine de toilettes selon un second exemple de mode de réalisation de l'invention, dans lequel un fauteuil roulant est représenté en approche latérale ;
- la figure 4 est une vue schématique de face d'un panneau fonctionnel équipant la cabine de toilettes.

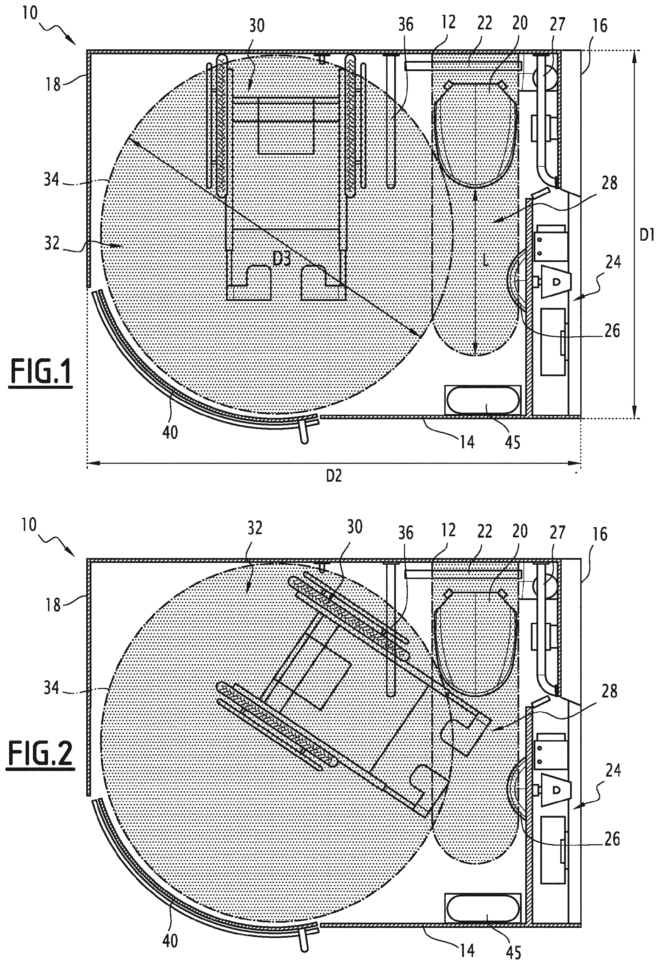

On a représenté, sur les figures 1 et 2, une cabine de toilettes 10 destinée à équiper un véhicule de transport public, notamment un véhicule ferroviaire.

La cabine de toilettes 10 comporte une paroi arrière 12, et une paroi avant 14 agencée en regard de la paroi arrière 12, sensiblement parallèle à celle-ci, et séparée de cette paroi arrière 12 par une première distance D1.

La cabine de toilettes 10 comporte par ailleurs une première paroi latérale 16, et une seconde paroi latérale 18, agencée en regard de la première paroi latérale 16, sensiblement parallèlement à celle-ci, et séparée de cette première paroi latérale 16 par une seconde distance maximale D2.

La cabine de toilettes 10 comporte une cuvette de toilettes 20, agencée à proximité de la paroi arrière 12 et de la première paroi latérale 16. En d'autres termes, la cuvette de toilettes 20 est agencée dans un coin de la cabine de toilettes 10.

Plus particulièrement, la cuvette de toilettes 20 est de préférence espacée de la paroi arrière 12 d'une distance inférieure à 50 mm, et elle est de préférence espacée de la première paroi latérale d'une distance comprise entre 150 mm et 170 mm, par exemple sensiblement égale à 160 mm.

On définit l'arrière de la cuvette de toilettes 20 comme faisant face à la paroi arrière 12, et l'avant de la cuvette de toilettes 20 comme faisant face à la paroi avant 14. En d'autres termes, la cuvette de toilettes 20 est tournée vers la paroi avant 14. On notera que l'avant de la cuvette de toilettes 20 correspond à l'avant d'un utilisateur en position normale d'utilisation assise.

Par ailleurs, la cuvette de toilettes 20 s'étend dans une direction longitudinale sensiblement parallèle aux première 16 et seconde 18 parois latérales.

Cette position de la cuvette de toilettes 20 telle que définie ci-dessus est optimale pour minimiser les dimensions générales de la cabine de toilettes 10.

De préférence, une table à langer 22 déployable est agencée de manière classique au-dessus de la cuvette de toilette 20, en étant fixée à la paroi arrière 12.

La première paroi latérale 16 porte un panneau fonctionnel 24, comprenant notamment un lavabo 26, muni d'un robinet 26A.

Ce panneau fonctionnel 24 comporte également d'autres éléments fonctionnels de la cabine de toilettes 10, notamment :
- un dispositif de distribution de papier toilette,
- un poussoir de chasse d'eau pour la cuvette de WC,
- un bouton d'appel au secours,
- un circuit de distribution d'eau, et une trappe d'accès à un réservoir d'eau,
- un miroir disposé au-dessus du lavabo 26,
- un dispositif de distribution de savon disposé à proximité du lavabo 26,
- un dispositif d'essuie-main, notamment de distribution de papier ou de tissus essuie-main,
- un circuit de distribution d'eau,
- un panneau électrique, et/ou
- tout autre élément fonctionnel envisageable.

Le panneau fonctionnel 24 porte également de préférence une première barre fixe d'appui latérale 27 s'étendant au côté de la cuvette de toilettes 20, parallèlement à celle-ci.

L'accès au lavabo 26 est garanti, notamment pour une personne à mobilité réduite, par un espace libre 28, dépourvu d'obstacles fixes autres que le lavabo 26, adjacent à ce lavabo 26. L'espace libre 28 s'étend en longueur en avant de la cuvette de toilettes 20, par exemple jusqu'à une poubelle 45 portée par la paroi avant 14, dans la direction longitudinale de cette cuvette de toilettes 20, donc parallèlement à la première paroi latérale 16 et perpendiculairement à la paroi arrière 12.

La longueur L de cet espace libre 28, prise dans une direction perpendiculaire à la paroi arrière 12, est au moins supérieure à 40% de la première distance D1, par exemple sensiblement supérieure à 700 mm.

Cet espace libre 28 permet à un utilisateur à mobilité réduite disposant d'un fauteuil roulant 30 d'accéder au lavabo 26 sans être gêné par la cuvette de toilettes 20 ou par la paroi avant 14.

La cabine de toilettes 10 selon l'invention présente au moins un espace circulaire 32, délimité par un cercle virtuel 34 tangent à la cuvette de toilettes 20, cet espace circulaire 30 étant dépourvu d'obstacle fixe et étant défini à proximité de la seconde paroi latérale 18. Ce cercle virtuel présente un diamètre D3 supérieur à 95% de la première distance D1, et supérieur à 70% de la seconde distance maximale D2.

Il est à noter que la majeure partie des équipements fonctionnels équipant la cabine 10 est portée par le panneau fonctionnel 24, afin de ne pas résider dans l'espace circulaire 32.

Comme cela est représenté sur les figures, l'espace circulaire 32 et l'espace libre 28 se chevauchent en partie.

Par exemple, la première distance D1 est sensiblement égale à 1560 mm, la seconde distance maximale D2 est sensiblement égale à 2100 mm, et le diamètre D3 du cercle virtuel 34 est sensiblement égal à 1500 mm.

Avantageusement, la cabine de toilettes 10 comporte une seconde barre d'appui latérale 36 relevable, agencée à proximité de la cuvette de toilettes 20, cette barre d'appui 36 étant mobile entre une position déployée, dans laquelle la barre d'appui s'étend dans l'espace circulaire 32, comme cela est représenté sur la figure 1, sensiblement parallèlement à la cuvette de toilettes 20 et à la première barre latérale 27, et une position rétractée (non représentée) dans laquelle la barre s'étend en dehors dudit espace circulaire 32. Par exemple, en position rétractée, la barre d'appui est repliée vers le haut pour s'étendre parallèlement à la paroi arrière 12.

On notera que cette seconde barre d'appui latérale 36 n'est pas un obstacle fixe s'étendant dans l'espace circulaire 32, car elle peut être repliée hors de cet espace circulaire 32.

La barre d'appui 36 est avantageusement agencée à une distance supérieure à 800 mm depuis la seconde paroi latérale 18, afin de permettre au fauteuil roulant 30 de se disposer latéralement en parallèle de la cuvette de toilettes 20, comme cela est représenté sur la figure 1. Ceci permet une approche latérale de l'utilisateur depuis le fauteuil roulant 30 vers la cuvette de toilettes 20.

Il est à noter que, comme cela est représenté sur la figure 2, la cabine de toilettes 10 selon l'invention permet également une approche en diagonale du fauteuil roulant 30 par rapport à la cuvette de toilettes 20.

Avantageusement, la cabine de toilettes 10 comporte une porte d'accès courbe coulissante 40 s'étendant entre la paroi avant 14 et la seconde paroi latérale 18, sensiblement parallèlement à un arc du cercle virtuel 34 délimitant l'espace circulaire 32, et en regard de cet arc.

Il apparait clairement que l'agencement de la cabine de toilettes 10 est optimisé pour autoriser la présence de l'espace circulaire 32 tout en présentant des dimensions D1 et D2 limitées.

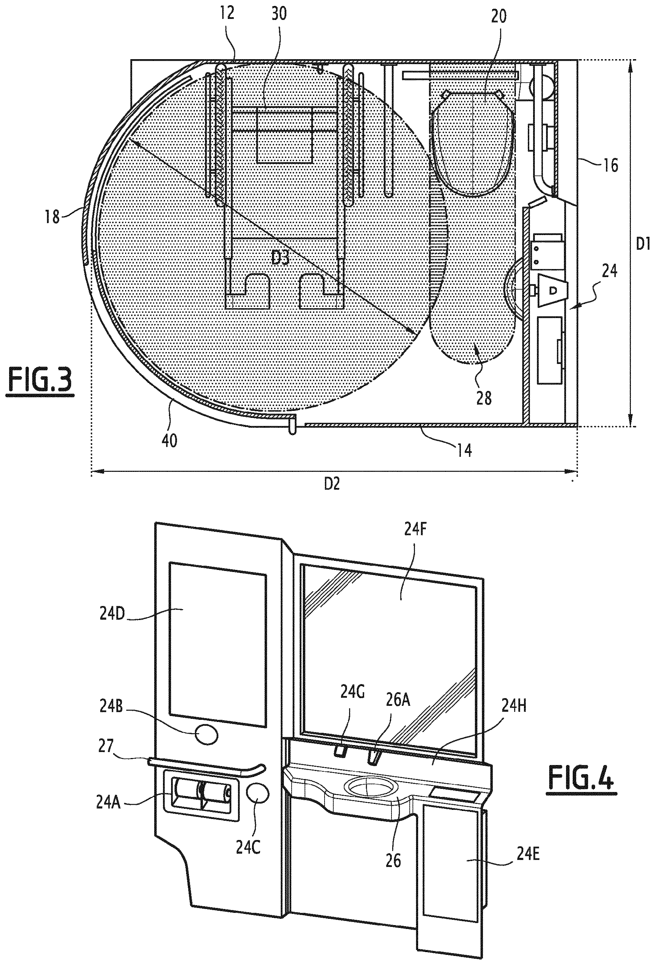

On a représenté sur la figure 3 une cabine de toilettes 10 selon un deuxième exemple de mode de réalisation de l'invention.

Conformément à ce deuxième mode de réalisation, la seconde paroi latérale 18 n'est pas droite.

Dans ce cas, la distance D2 entre les première 16 et seconde 18 parois latérales est la distance maximale entre ces parois. Plus particulièrement, la distance D2 est définie comme la distance, dans une direction transversale perpendiculaire à la première paroi latérale 16, entre deux points les plus éloignés, l'un pris sur la première paroi latérale 16 et l'autre pris sur la seconde paroi latérale 18.

Dans ce deuxième mode de réalisation, la seconde paroi latérale 18 est courbe, et plus particulièrement forme un arc de cercle. La distance D2 est considérée à partir du point de cet arc de cercle le plus éloigné de la première paroi latérale 16 dans ladite direction transversale. Il est à noter que la tangente en ce point est sensiblement parallèle à la première paroi latérale 16.

Cette configuration permet notamment de réduite le volume global de la cabine de toilettes 10. La seconde paroi latérale 18 épouse alors la forme de la porte d'accès courbe coulissante 40 en position ouverte, et elle est parallèle au cercle virtuel 34.

Conformément à une variante de réalisation, représentée sur cette figure 3, la position de la poubelle 45 est modifiée pour être intégrée au panneau fonctionnel 24, comme celui représenté sur la figure 4. Cette variante permet d'agrandir l'espace libre 28 afin d'améliorer l'accessibilité au lavabo 26, notamment pour les personnes à mobilité réduite.

Ce panneau fonctionnel 24 comporte également d'autres éléments fonctionnels de la cabine de toilettes 10, notamment :
- un dispositif de distribution de papier toilette 24A,
- un poussoir 24B de chasse d'eau pour la cuvette de WC,
- un bouton 24C d'appel au secours,
- un circuit de distribution d'eau, et une trappe 24D d'accès à un réservoir d'eau,
- une poubelle 24E,
- un miroir 24F disposé au-dessus du lavabo 26,
- un dispositif de distribution de savon 24G disposé à proximité du lavabo 26,
- un dispositif d'essuie-main 24H, notamment de distribution de papier ou de tissus essuie-main,
- un circuit de distribution d'eau, dissimulé par une trappe 24I,
- un panneau électrique, et/ou
- tout autre élément fonctionnel envisageable.

On notera que l'invention n'est pas limitée aux modes de réalisation précédemment décrits, mais pourrait présenter diverses autres variantes, pourvu qu'elles soient couvertes par les revendications 1 à 9.

## Revendications

1. Cabine de toilettes (10) de véhicule de transport public, notamment de véhicule ferroviaire, destinée à accueillir une personne à mobilité réduite, cette cabine étant délimitée par :
- une paroi avant (14),
- une paroi arrière (12), agencée en regard de la paroi avant (14), et séparée de la paroi avant par une première distance (D1), une cuvette de toilettes (20) étant agencée à proximité de cette paroi arrière (12), cette cuvette de toilettes (20) étant tournée vers la paroi avant (14),
- une première paroi latérale (16), à proximité de laquelle est agencée la cuvette de toilettes (20), et
- une seconde paroi latérale (18), agencée en regard de la première paroi latérale (16), une seconde distance maximale (D2) étant définie entre cette seconde paroi latérale (18) et la première paroi latérale (16),
**caractérisée**
**en ce qu'**au moins un espace circulaire (32), délimité par un cercle virtuel (34) tangent à la cuvette de toilettes (20), est défini à proximité de la seconde paroi latérale (18), cet espace circulaire (32) étant dépourvu d'obstacle fixe, et le cercle virtuel (34) présentant un diamètre (D3) supérieur à 95% de la première distance (D1) et supérieur à 70% de la seconde distance maximale (D2).

2. Cabine de toilettes (10) selon la revendication 1, dans laquelle la première paroi latérale (16) porte un panneau fonctionnel (24) comprenant notamment un lavabo (26), et dans laquelle un espace libre (28), dépourvu d'obstacle fixe autre que le lavabo (26) et de longueur supérieure à 40% de la première distance (D1), est ménagé en avant de la cuvette de toilettes (20), le lavabo (26) étant adjacent à cet espace libre (28).

3. Cabine de toilettes (10) selon la revendication 2, dans laquelle l'espace circulaire (32) et l'espace libre (28) se chevauchent en partie.

4. Cabine de toilettes (10) selon l'une quelconque des revendications précédentes, comportant une barre latérale d'appui relevable (36) agencée à proximité de la cuvette de toilette (20), mobile entre une position déployée dans laquelle la barre latérale d'appui (36) s'étend dans l'espace circulaire (32), sensiblement parallèlement à la cuvette de toilette (20), et une position rétractée dans laquelle la barre latérale d'appui (36) s'étend en dehors dudit espace circulaire (32).

5. Cabine de toilettes (10) selon la revendication 4, dans laquelle la barre d'appui latérale (36) est agencée à une distance supérieure à 800 mm depuis la seconde paroi latérale (18).

6. Cabine de toilettes (10) selon l'une quelconque des revendications précédentes, dans laquelle la cuvette de toilettes (20) s'étend sensiblement parallèlement aux première (16) et seconde (18) parois latérales.

7. Cabine de toilettes (10) selon l'une quelconque des revendications précédentes, comportant une porte coulissante courbe (40) s'étendant en position fermée entre la paroi avant (14) et la seconde paroi latérale (18), sensiblement parallèlement à un arc du cercle virtuel (34) délimitant l'espace circulaire (32), et en regard de cet arc.

8. Cabine de toilettes (10) selon l'une quelconque des revendications précédentes, dans laquelle :
- la première distance (D1) est sensiblement égale à 1560 mm,
- la seconde distance maximale (D2) est sensiblement égale à 2100 mm, et
- le diamètre (D3) du cercle virtuel (34) est sensiblement égal à 1500 mm.

9. Véhicule de transport public, notamment véhicule ferroviaire, **caractérisé en ce qu'**il comporte une cabine de toilettes (10) selon l'une quelconque des revendications précédentes.

## Patentansprüche

1. Toilettenkabine für ein Fahrzeug des öffentlichen Verkehrs, insbesondere Schienenfahrzeug, das vorgesehen ist, Personen mit verringerter Mobilität aufzunehmen, wobei diese Kabine abgegrenzt ist durch:
- eine Vorderwand (14),
- eine Rückwand (12), die gegenüber der Vorderwand (14) angeordnet ist und von der Vorderwand durch eine erste Entfernung (D1) getrennt ist, wobei eine Toilettenschüssel (20) in der Nähe dieser Rückwand (12) angeordnet ist und diese Toilettenschüssel (20) zu der Vorderwand (14) gerichtet ist,
- eine erste Seitenwand (16), in dessen Nähe die Toilettenschüssel (20) angeordnet ist und
- eine zweite Seitenwand (18), die gegenüber der ersten Seitenwand (16) angeordnet ist, wobei eine zweite maximale Entfernung (D2) zwischen dieser zweiten Seitenwand (18) und der ersten Seitenwand (16) definiert ist,
**dadurch gekennzeichnet, dass**
mindestens ein kreisförmiger Raum (32), begrenzt durch einen virtuellen Kreis (34) tangential zu der Toilettenschüssel (20), in der Nähe der zweiten Seitenwand (18) definiert ist, wobei dieser kreisförmiger Raum (32) ohne feststehende Hindernisse ist und der virtuelle Kreis (34) einen Durchmesser (D3) größer als 95% der ersten Entfernung (D1) und größer als 70% der zweiten maximalen Entfernung (D2) aufweist.

2. Toilettenkabine (10) nach Anspruch 1, bei der die erste Seitenwand (16) ein Funktionspaneel (24) trägt, das insbesondere ein Waschbecken (26) umfasst, und in der ein freier Raum (28), der neben dem Waschbecken (26) ohne feststehendes Hindernis liegt und von einer Länge größer als 40% der ersten Entfernung (D1) ist, vor der Toilettenschüssel (20) vorgesehen ist, wobei das Waschbecken (26) angrenzend an diesen freien Raum (28) angeordnet ist.

3. Toilettenkabine (10) nach Anspruch 2, bei der der kreisförmige Raum (32) und der freie Raum (28) teilweise überlappen.

4. Toilettenkabine (10) nach einem beliebigen der vorhergehenden Ansprüche, die eine seitliche anhebbare Stützstange (36) aufweist, die in der Nähe der Toilettenschüssel (20) angeordnet ist und zwischen einer ausgeklappten Stellung, in der die seitliche Stützstange (36) sich in den kreisförmigen Raum (32) im Wesentlichen parallel zu der Toilettenschüssel (20) erstreckt und einer zurückgestellten Stellung, in der die seitliche Stützstange (36) sich außerhalb des kreisförmigen Raums (32) erstreckt.

5. Toilettenkabine (10) nach Anspruch 4, bei der die seitliche Stützstange (36) an einem Abstand größer als 800 mm von der zweiten Seitenwand (18) angeordnet ist.

6. Toilettenkabine (10) nach einem beliebigen der vorhergehenden Ansprüche, bei der die Toilettenschüssel (20) sich im Wesentlichen parallel zur ersten (16) und zweiten (18) Seitenwand erstreckt.

7. Toilettenkabine (10) nach einem beliebigen der vorhergehenden Ansprüche, die eine gekrümmte Schiebetür (40) aufweist, die sich in einer geschlossenen Stellung zwischen der Vorderwand (14) und der zweiten Seitenwand (18) im Wesentlichen parallel zu einem virtuellen Kreisbogen (34), der den kreisförmigen Raum (32) begrenzt, und zu diesem Bogen gegenüberliegend erstreckt.

8. Toilettenkabine (10) nach einem beliebigen der vorhergehenden Ansprüche, bei der:
- die erste Entfernung (D1) im Wesentlichen gleich 1560 mm ist,
- die zweite maximale Entfernung (D2) im Wesentlichen gleich 2100 mm ist und
- der Durchmesser (D3) des virtuellen Kreises (34) im Wesentlichen gleich 1500 mm ist.

9. Fahrzeug des öffentlichen Verkehrs, insbesondere Schienenfahrzeug, **dadurch gekennzeichnet, dass** es eine Toilettenkabine (10) nach einem beliebigen der vorhergehenden Ansprüche aufweist.

## Claims

1. A toilet cabin (10) for a public transport vehicle, in particular a railway vehicle, intended to receive a person with reduced mobility, said cabin being delimited by:
- a front wall (14);
- a rear wall (12), arranged to be facing the front wall (14), and separated from the front wall by a first distance (D1), with a toilet bowl (20) being arranged in the proximity of this rear wall (12), this toilet bowl (20) being turned to be facing toward the front wall (14);
- a first lateral wall (16), in the proximity of which the toilet bowl (20) is arranged; and
- a second lateral wall (18) arranged to be facing the first lateral wall (16), a second maximal distance (D2) being defined between this second lateral wall (18) and the first lateral wall (16);
**characterized in that** at least one circular space (32), delimited by a virtual circle (34) tangent to the toilet bowl (20), is defined in the proximity of the second lateral wall (18), this circular space (32) being free of any fixed obstructing fittings, and the virtual circle (34) presenting a diameter (D3) that is greater than 95% of the first distance (D1) and greater than 70% of the second maximal distance (D2).

2. A toilet cabin (10) according to claim 1, in which the first lateral wall (16) bears a functional panel (24) that includes in particular a wash basin (26), and in which a free space (28), devoid of any fixed obstructing fittings other than the wash basin (26) and having a length greater than 40% of the first distance (D1), is provided in front of the toilet bowl (20) with the wash basin (26) being located adjacent to this free space (28).

3. A toilet cabin (10) according to claim 2, in which the circular space (32) and the free space (28) overlap in part.

4. A toilet cabin (10) according to any of preceding claims, which includes a lateral drop-down grab rail (36) arranged in the proximity of the toilet bowl (20), that is movable between a deployed position, in which the lateral grab rail (36) extends into the circular space (32), parallel to the toilet bowl (20), and a retracted position in which the lateral grab rail (36) extends outside of the said circular space (32).

5. A toilet cabin (10) according to claim 4, in which the lateral grab rail (36) is arranged at a distance that is greater than 800 mm from the second lateral wall (18).

6. A toilet cabin (10) according to any of preceding claims, in which the toilet bowl (20) extends parallel to the first (16) and second (18) lateral walls.

7. A toilet cabin (10) according to any of preceding claims, which includes a curved sliding door (40) extending in closed position between the front wall (14) and the second lateral wall (18), parallelly to an arc of the virtual circle (34) delimiting the circular space (32), and arranged and to be facing this arc.

8. A toilet cabin (10) according to any of preceding claims, in which:
- the first distance (D1) is equal to 1560 mm,
- the second maximal distance (D2) is equal to 2100 mm, and
- the diameter (D3) of the virtual circle is equal to 1500 mm.

9. A public transport vehicle, in particular a railway vehicle, **characterized in that** it includes a toilet cabin according to any of preceding claims.
